# EUROPEAN PATENT APPLICATION

(11) **EP 4 376 134 A1**
(43) Date of publication of application: **29.05.2024**
(21) Application number: 22864673.3
(22) Date of filing: 31.08.2022
(51) Int. Cl.: H01M 8/2484, H01M 8/12

(54) **ELECTROCHEMICAL CELL DEVICE, MODULE, AND MODULE ACCOMMODATION DEVICE**

(30) Priority: 31.08.2021 JP 2021141976
(71) Applicant: Kyocera Corporation, Kyoto-shi Kyoto 612-8501 (JP)
(72) Inventor: IMANAKA, Kazuya, Kyoto-shi, Kyoto 612-8501 (JP)
(74) Representative: Viering, Jentschura & Partner mbB Patent- und Rechtsanwälte
(86) International application number: PCT/JP2022/032889
(87) International publication number: WO 2023/033091

(57) **Abstract**

An electrochemical cell device includes an electrochemical cell and a support member. The support member includes a first portion located on an upstream side in a first direction in which a reactive gas flows and a second portion located on a downstream side in the first direction with respect to the first portion. The first portion and the second portion have different reflectances to infrared light.

## Description

### TECHNICAL FIELD

The present disclosure relates to an electrochemical cell device, a module, and a module housing device.

### BACKGROUND OF INVENTION

In recent years, various fuel cell stack devices each including a plurality of fuel cells have been proposed, as next-generation energy. The fuel cell is a type of electrochemical cell capable of obtaining electrical power by using a fuel gas such as a hydrogen-containing gas and an oxygen-containing gas such as air. Gases such as a fuel gas and an oxygen-containing gas may be collectively referred to as a reactive gas.

### CITATION LIST

### PATENT LITERATURE

Patent Document 1: WO 2009/131180

### SUMMARY

In an aspect of an embodiment, an electrochemical cell device includes an electrochemical cell and a support member. The support member supports the electrochemical cell. The support member includes a first portion located on an upstream side in a first direction in which a reactive gas flows, and a second portion located on a downstream side in the first direction with respect to the first portion. The first portion and the second portion have different reflectances to infrared light.

In addition, in an aspect of an embodiment, an electrochemical cell device includes an electrochemical cell and a support member. The support member supports the electrochemical cell. The support member includes a first portion located at a low-temperature portion of the electrochemical cell and a second portion located at a high-temperature portion of the electrochemical cell higher in temperature than the low-temperature portion. The first portion and the second portion have different reflectances to infrared light.

Additionally, a module of the present disclosure includes the electrochemical cell device described above and a storage container storing the electrochemical cell device.

Furthermore, a module housing device of the present disclosure includes the module described above, an auxiliary device configured to operate the module, and an external case that houses the module and the auxiliary device.

### BRIEF DESCRIPTION OF THE DRAWINGS

FIG. 1A is a horizontal cross-sectional view illustrating an example of an electrochemical cell according to an embodiment.
FIG. 1B is a side view of the example of the electrochemical cell according to the embodiment when viewed from an air electrode side.
FIG. 1C is a side view of the example of the electrochemical cell according to the embodiment when viewed from an interconnector side.
FIG. 1D is a horizontal cross-sectional view illustrating another example of the electrochemical cell according to the embodiment.
FIG. 1E is a horizontal cross-sectional view illustrating still another example of the electrochemical cell according to the embodiment.
FIG. 1F is a horizontal cross-sectional view illustrating yet still another example of the electrochemical cell according to the embodiment.
FIG. 2A is a perspective view illustrating an example of an electrochemical cell device according to the first embodiment.
FIG. 2B is a cross-sectional view taken along a line X-X in FIG. 2A.
FIG. 2C is a top view illustrating an example of the electrochemical cell device according to the first embodiment.
FIG. 3A is a cross-sectional view illustrating an example of the electrochemical cell device according to the first embodiment.
FIG. 3B is a cross-sectional view illustrating another example of the electrochemical cell device according to the first embodiment.
FIG. 3C is a cross-sectional view illustrating still another example of the electrochemical cell device according to the first embodiment.
FIG. 3D is a cross-sectional view illustrating yet still another example of the electrochemical cell device according to the first embodiment.
FIG. 4 is an exterior perspective view illustrating an example of a module according to the first embodiment.
FIG. 5 is an exploded perspective view schematically illustrating an example of a module housing device according to the first embodiment.
FIG. 6A is a cross-sectional view illustrating an example of an electrochemical cell device according to a second embodiment.
FIG. 6B is a cross-sectional view illustrating another example of the electrochemical cell device according to the second embodiment.
FIG. 7A is a perspective view illustrating another example of a support member.
FIG. 7B is a perspective view illustrating still another example of the support member.
FIG. 8A is a cross-sectional view illustrating an example of an electrochemical cell device according to a third embodiment.
FIG. 8B is a cross-sectional view illustrating another example of the electrochemical cell device according to the third embodiment.

### DESCRIPTION OF EMBODIMENTS

In the fuel cell stack device, for example, when the temperature in the electrochemical cell varies, the power generation performance and the durability may be reduced, and there is room for improvement in terms of improving the battery performance.

Therefore, it is expected to provide an electrochemical cell device, a module, and a module housing device having improved battery performance.

Embodiments of an electrochemical cell device, a module, and a module housing device disclosed in the present application will be described below in detail with reference to the accompanying drawings. Note that the disclosure is not limited by the following embodiments.

Note that the drawings are schematic and that the dimensional relationships between elements, the proportions of the elements, and the like may differ from the actual ones. Furthermore, there may be differences between the drawings in the dimensional relationships, proportions, and the like.

### First Embodiment

### Configuration of Electrochemical Cell

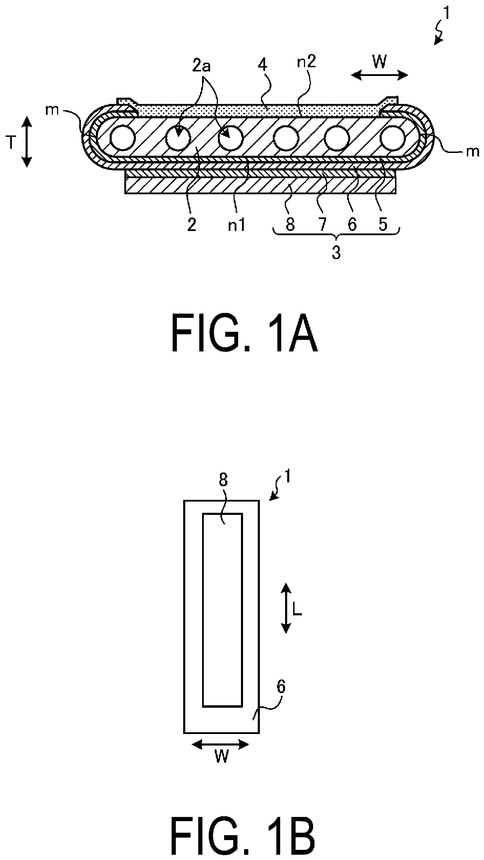

First, with reference to FIGs. 1A to 1C, an example of a solid oxide fuel cell will be described as an electrochemical cell constituting an electrochemical cell device according to a first embodiment. The electrochemical cell device may include a cell stack including a plurality of the electrochemical cells. The electrochemical cell device including the plurality of electrochemical cells is simply referred to as a cell stack device.

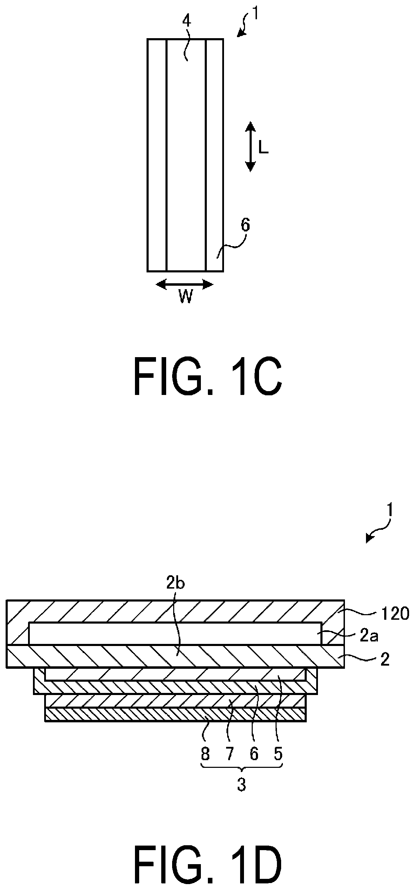

FIG. 1A is a horizontal cross-sectional view illustrating an example of an electrochemical cell according to an embodiment, FIG. 1B is a side view of the example of the electrochemical cell according to the embodiment when viewed from an air electrode side, and FIG. 1C is a side view of the example of the electrochemical cell according to the embodiment when viewed from an interconnector side. Note that FIGs. 1A to 1C each illustrate an enlarged view of part of configurations of the electrochemical cell. Hereinafter, the electrochemical cell may be simply referred to as a cell.

In the example illustrated in FIGs. 1A to 1C, the cell 1 is hollow flat plate-shaped, and has an elongated plate shape. As illustrated in FIG. 1B, the overall shape of the cell 1 when viewed from the side is, for example, a rectangle having a side length of 5 cm to 50 cm in a length direction L and a length of 1 cm to 10 cm in a width direction W orthogonal to the length direction L. The thickness in a thickness direction T of the entire cell 1 is, for example, 1 mm to 5 mm.

As illustrated in FIG. 1A, the cell 1 includes a support substrate 2 with electrical conductivity, an element portion 3, and an interconnector 4. The support substrate 2 has a pillar shape with a pair of facing flat surfaces n1, n2 and a pair of side surfaces m in a circular arc shape connecting the flat surfaces n1, n2.

The element portion 3 is provided on the flat surface n1 of the support substrate 2. The element portion 3 includes a fuel electrode 5, a solid electrolyte layer 6, and an air electrode 8. In the example illustrated in FIG. 1A, the interconnector 4 is located on the flat surface n2 of the cell 1. Note that the cell 1 may include an intermediate layer 7 between the solid electrolyte layer 6 and the air electrode 8.

As illustrated in FIG. 1B, the air electrode 8 does not extend to the lower end of the cell 1. At the lower end portion of the cell 1, only the solid electrolyte layer 6 is exposed on a surface of the flat surface n1. As illustrated in FIG. 1C, the interconnector 4 may extend to the lower end of the cell 1. At the lower end portion of the cell 1, the interconnector 4 and the solid electrolyte layer 6 are exposed on the surface. Note that, as illustrated in FIG. 1A, the solid electrolyte layer 6 is exposed at the surface at the pair of side surfaces m in a circular arc shape of the cell 1. The interconnector 4 need not extend to the lower end of the cell 1.

Hereinafter, each of constituent members constituting the cell 1 will be described.

The support substrate 2 includes gas-flow passages 2a, in which gas flows. The example of the support substrate 2 illustrated in FIG. 1A includes six gas-flow passages 2a. The support substrate 2 has gas permeability and allows a fuel gas flowing through the gas-flow passages 2a to permeate to the fuel electrode 5. The support substrate 2 may be electrically conductive. The support substrate 2 having electrical conductivity collects electricity generated in the element portion 3 to the interconnector 4.

The material of the support substrate 2 includes, for example, an iron group metal component and an inorganic oxide. For example, the iron group metal component may be, for example, Ni (nickel) and/or NiO. The inorganic oxide may be, for example, a specific rare earth element oxide. The rare earth element oxide may contain, for example, one or more rare earth elements selected from Sc, Y, La, Nd, Sm, Gd, Dy, and Yb.

As the material of the fuel electrode 5, a commonly known material may be used. As the fuel electrode 5, porous electrically conductive ceramics, for example, ceramics containing: ZrO₂ in which a calcium oxide, a magnesium oxide, or a rare earth element oxide is in solid solution, and Ni and/or NiO may be used. This rare earth element oxide may contain a plurality of rare earth elements selected from, for example, Sc, Y, La, Nd, Sm, Gd, Dy, and Yb. Hereinafter, ZrO₂ in which a calcium oxide, a magnesium oxide, or a rare earth element oxide is in solid solution may be referred to as stabilized zirconia. Stabilized zirconia also includes partially stabilized zirconia.

The solid electrolyte layer 6 is an electrolyte and delivers ions between the fuel electrode 5 and the air electrode 8. At the same time, the solid electrolyte layer 6 has gas blocking properties, and makes leakage of the fuel gas and the oxygen-containing gas less likely to occur.

A material of the solid electrolyte layer 6 may be, for example, ZrO₂ in which 3 mole% to 15 mole% of a rare earth element oxide, calcium oxide, and magnesium oxide are in solid solution. The rare earth element oxide may contain, for example, one or more rare earth elements selected from Sc, Y, La, Nd, Sm, Gd, Dy, and Yb. The solid electrolyte layer 6 may include, for example, CeO₂ in which La, Nd, Sm, Gd, or Yb is in solid solution, BaZrO₃ in which Sc or Yb is in solid solution, or BaCeO₃ in which Sc or Yb is in solid solution.

The air electrode 8 has gas permeability. The open porosity of the air electrode 8 may be, for example, in the range of 20% to 50%, particularly in the range of 30% to 50%.

The material of the air electrode 8 is not particularly limited, as long as the material is one generally used for the air electrode. The material of the air electrode 8 may be, for example, an electrically conductive ceramic such as a so-called ABO₃ type perovskite oxide.

The material of the air electrode 8 may be, for example, a composite oxide in which strontium (Sr) and lanthanum (La) coexist at the A site. Examples of such a composite oxide include LaₓSr₁₋ₓCo_{y}Fe_{1-y}O₃, LaₓSr₁₋ₓMnO₃, LaₓSr₁₋ₓFeO₃, and LaₓSr₁₋ₓCoO_{3.} Here, x is 0 < x < 1, and y is 0 < y < 1.

When the element portion 3 includes the intermediate layer 7, the intermediate layer 7 functions as a diffusion prevention layer. When an element such as strontium (Sr) contained in the air electrode 8 diffuses into the solid electrolyte layer 6, a resistance layer such as, for example, SrZrO₃ is formed in the solid electrolyte layer 6. The intermediate layer 7 suppresses the diffusion of Sr and makes it difficult to form SrZrO₃ and other oxides having electrical insulation properties.

A material of the intermediate layer 7 is not particularly limited as long as the material is one generally used for the diffusion suppression layer of an element between the air electrode 8 and the solid electrolyte layer 6. The material of the intermediate layer 7 may contain, for example, cerium oxide (CeO₂) in which a rare earth element other than cerium (Ce) is in solid solution. As such a rare earth element, for example, gadolinium (Gd), samarium (Sm), or the like may be used.

The interconnector 4 is dense, and makes the leakage of the fuel gas flowing through the gas-flow passages 2a located inside the support substrate 2, and of the oxygen-containing gas flowing outside the support substrate 2 less likely to occur. The interconnector 4 may have a relative density of 93% or more; particularly 95% or more.

As the material of the interconnector 4, a lanthanum chromite-based perovskite oxide (LaCrOs-based oxide), a lanthanum strontium titanium-based perovskite oxide (LaSrTiO₃-based oxide), or the like may be used. These materials have electrical conductivity, and are unlikely to be reduced and also unlikely to be oxidized even when exposed to a fuel gas such as a hydrogen-containing gas and an oxygen-containing gas such as air. In addition, a metal or an alloy may be used as the material of the interconnector 4.

The support substrate 2 may be made of a metal or an alloy as illustrated in FIG. 1D to FIG. 1F. FIG. 1D to FIG. 1F are horizontal cross-sectional views illustrating other examples of the electrochemical cell according to the embodiment.

As illustrated in FIGs. 1D to 1F, the cell 1 includes the element portion 3 in which the fuel electrode 5, the solid electrolyte layer 6, the intermediate layer 7, and the air electrode 8 are layered, and the support substrate 2. The metal-made or alloy-made support substrate 2 includes a gas permeable portion 2b through which gas can flow between the gas-flow passage 2a and the fuel electrode 5, and a member 120 located outside the gas-flow passage 2a. The gas permeable portion 2b has a through hole or a pore leading from the gas-flow passage 2a to the fuel electrode 5. The support substrate 2 may be made of, for example, one or more metal plates. A material of the metal plate may contain chromium. The metal plate may include an electrically conductive coating layer. The support substrate 2 electrically connects adjacent ones of the cells 1 to each other. The element portion 3 may be directly formed on the support substrate 2 or may be bonded to the support substrate 2 via a bonding material.

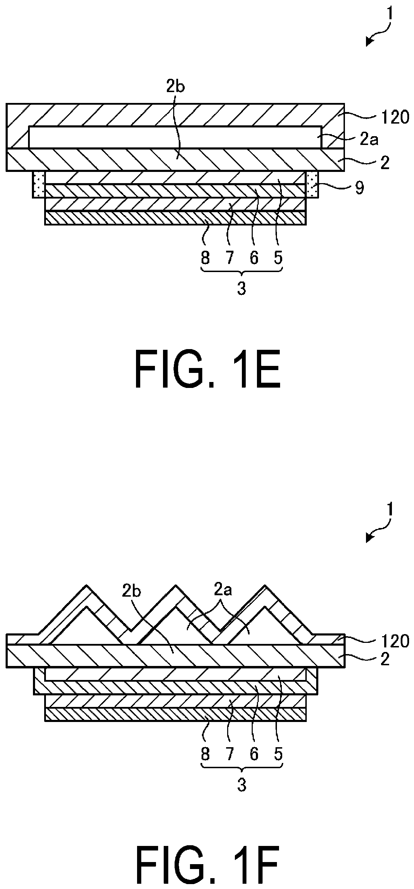

In the example illustrated in FIG. 1D, the side surface of the fuel electrode 5 is covered with the solid electrolyte layer 6 to hermetically seal the gas-flow passage 2a through which the fuel gas flows. As illustrated in FIG. 1E, the side surface of the fuel electrode 5 may be covered and sealed with a dense sealing material 9. The sealing material 9 covering the side surface of the fuel electrode 5 may have electrical insulation properties. As a material of the sealing material 9, glass or a ceramic may be used, for example.

The gas-flow passage 2a of the support substrate 2 may be made of the member 120 having unevenness as illustrated in FIG. 1F.

### Configuration of Electrochemical Cell Device

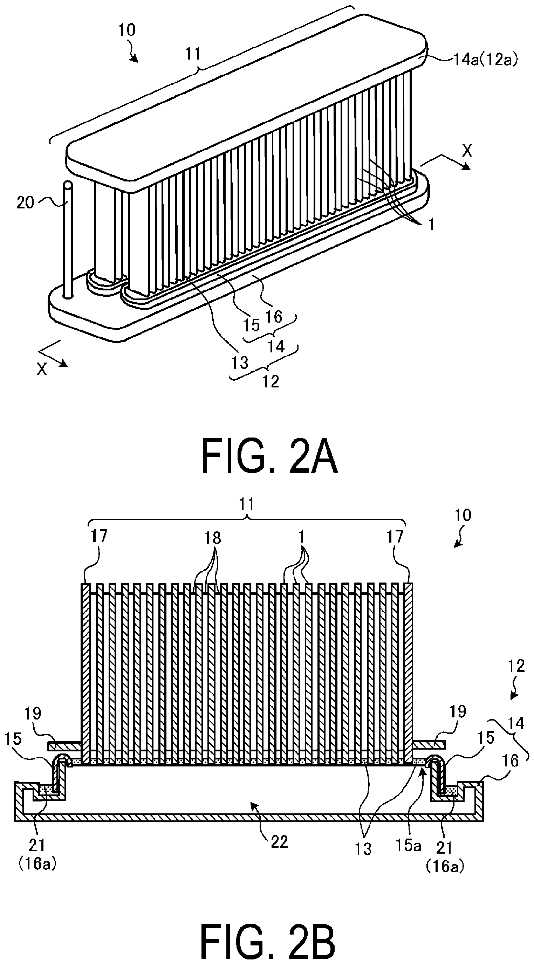

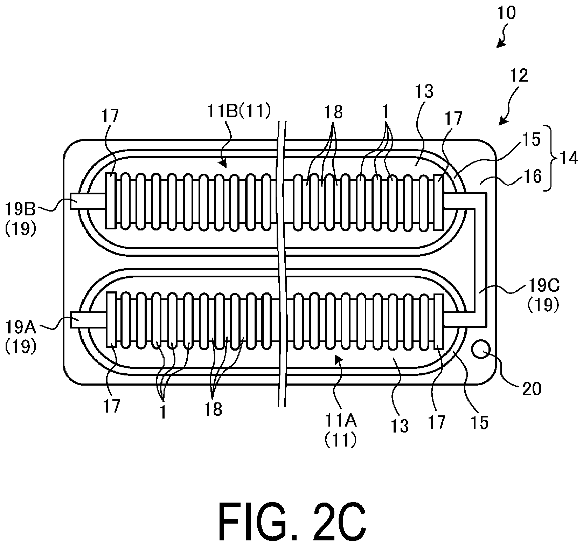

An electrochemical cell device according to the present embodiment using the cell 1 described above will be described with reference to FIGs. 2A to 2C. FIG. 2A is a perspective view illustrating an example of the electrochemical cell device according to the first embodiment, FIG. 2B is a cross-sectional view taken along a line X-X in FIG. 2A, and FIG. 2C is a top view illustrating an example of the electrochemical cell device according to the first embodiment.

As illustrated in FIG. 2A, a cell stack device 10 includes a cell stack 11 including a plurality of the cells 1 arrayed (stacked) in the thickness direction T (see FIG. 1A) of each cell 1, and fixing members 12 and 12a.

The fixing member 12 includes a fixing material 13 and a support member 14. The support member 14 supports the cells 1. The fixing material 13 fixes the cells 1 to the support member 14. The support member 14 includes a support body 15 and a gas tank 16. The support body 15 and the gas tank 16, constituting the support member 14, are made of, for example, a metal and electrically conductive.

The fixing member 12a is positioned so as to face the fixing member 12 with the cell stack 11 interposed therebetween. The fixing member 12 fixes lower end sides of the cells 1, and the fixing member 12a fixes upper end sides of the cells 1. Note that in FIGs. 2B and 2C, the fixing member 12a is not illustrated.

As illustrated in FIG. 2B, the support body 15 includes an insertion hole 15a, into which the lower end portions of the plurality of cells 1 are inserted. The lower end portions of the plurality of cells 1 and the inner wall of the insertion hole 15a are bonded by the fixing material 13.

The gas tank 16 includes an opening portion through which a reactive gas is supplied to the plurality of cells 1 via the insertion hole 15a, and a recessed groove 16a located in the periphery of the opening portion. The outer peripheral end portion of the support body 15 is bonded to the gas tank 16 by a bonding material 21, with which the recessed groove 16a of the gas tank 16 is filled.

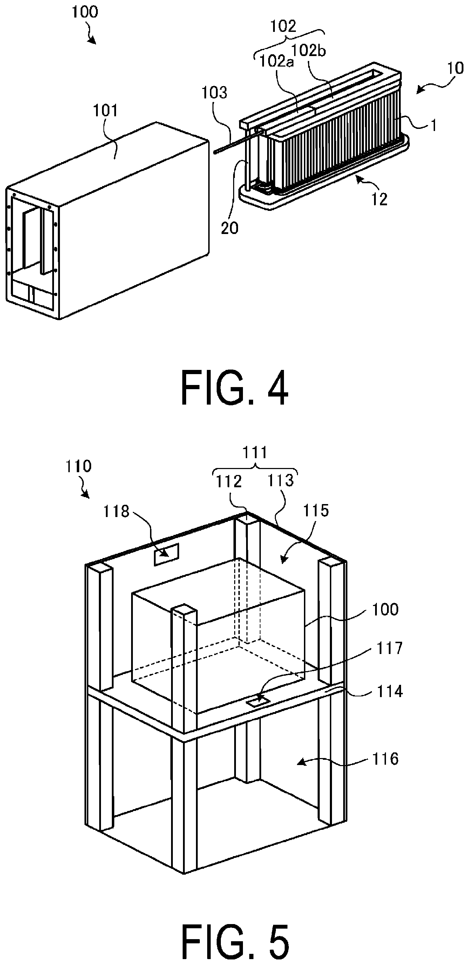

In the example illustrated in FIG. 2A, the fuel gas is stored in an internal space 22 formed by the support body 15 and the gas tank 16. The support body 15 and the gas tank 16 constitute the support member 14. The gas tank 16 includes a gas circulation pipe 20 connected thereto. The fuel gas is supplied to the gas tank 16 through the gas circulation pipe 20, is supplied from the gas tank 16 to the gas-flow passages 2a (see FIG. 1A) inside the cells 1, and is discharged from the upper end portion sides of the cells 1 to the fixing member 12a. The fuel gas supplied to the gas tank 16 is produced by a reformer 102 (see FIG. 4), which will be described below. The fuel gas discharged to the fixing member 12a may be further discharged from a gas discharge pipe (not illustrated) and processed, or may be supplied to the cell stack 11 or a cell stack different from the cell stack 11 through the reformer again.

A hydrogen-rich fuel gas can be produced, for example, by steam-reforming a raw fuel. When the fuel gas is produced by steam reforming, the fuel gas contains steam.

In the example illustrated in FIG. 2A, the cell stack device 10 includes two rows of cell stacks 11, and support members 14 and 14a. The support member 14 includes the two support bodies 15 and the gas tank 16. Each of the two rows of the cell stacks 11 includes the plurality of cells 1. Each of the cell stacks 11 is fixed to a corresponding one of the support bodies 15. An upper surface of the gas tank 16 includes two through holes. Each of the support bodies 15 is disposed in a corresponding one of the through holes. The internal space 22 is formed by the one gas tank 16 and the two support bodies 15. Like the support member 14, the support member 14a may also include two support bodies and a gas tank. Although the cell stack device 10 including two rows of cell stacks 11 is illustrated in FIG. 2A, the cell stack device may include one row of cell stack 11 or three or more rows of cell stacks 11.

The insertion hole 15a has, for example, an oval shape in a top surface view. The length of the insertion hole 15a in an arrangement direction of the cells 1, that is, the thickness direction T, is longer than the distance between two end current collection members 17 located at two ends of the cell stack 11, for example. The width of the insertion hole 15a is, for example, greater than the length of the cell 1 in the width direction W (see FIG. 1A).

As illustrated in FIG. 2B, a bonding portion between the inner wall of the insertion hole 15a and the lower end portion of each of the cells 1 is filled with the fixing material 13 and solidified. As a result, the inner wall of the insertion hole 15a and the lower end portions of the plurality of cells 1 are bonded and fixed, and the lower end portions of the cells 1 are bonded and fixed to each other. The gas-flow passages 2a of each of the cells 1 communicate, at the lower end portion, with the internal space 22 of the support member 14.

The fixing material 13 and the bonding material 21 may be of low electrical conductivity, such as glass. As the specific materials of the fixing material 13 and the bonding material 21, amorphous glass or the like may be used, and especially, crystallized glass or the like may be used.

As the crystallized glass, for example, any one selected from the group consisting of SiO₂-CaO-based, MgO-B₂O₃-based, La₂O₃-B₂O₃-MgO-based, La₂O₃-B₂O₃-ZnO-based, and SiO₂-CaO-ZnO-based materials may be used, or, in particular, a SiO₂-MgO-based material may be used.

As illustrated in FIG. 2B, electrically conductive members 18 are each interposed between adjacent ones of the cells 1 of the plurality of cells 1. Each of the electrically conductive members 18 electrically connects in series the fuel electrode 5 of one of the adjacent ones of the cells 1 with the air electrode 8 of the other one of the adjacent ones of the cells 1. More specifically, the electrically conductive member 18 connects the interconnector 4 electrically connected to the fuel electrode 5 of the one of the adjacent ones of the cells 1 and the air electrode 8 of the other one of the adjacent ones of the cells 1. Note that when the interconnector 4 is made of a metal or an alloy, the interconnector 4 and the electrically conductive member 18 may be integrated with each other, or the electrically conductive member 18 may also serve as the interconnector 4.

As illustrated in FIG. 2B, the end current collection members 17 are electrically connected to the cells 1 located at the outermost sides in the arrangement direction of the plurality of cells 1. The end current collection members 17 are each connected to an electrically conductive portion 19 protruding outward from the cell stack 11. The electrically conductive portion 19 collects electricity generated by the cells 1, and conducts the electricity to the outside. Note that in FIG. 2A, the end current collection members 17 are not illustrated.

As illustrated in FIG. 2C, in the cell stack device 10, two cell stacks 11A and 11B, which are connected in series, function as one battery. Thus, the electrically conductive portion 19 of the cell stack device 10 is divided into a positive electrode terminal 19A, a negative electrode terminal 19B, and a connection terminal 19C.

The positive electrode terminal 19A functions as a positive electrode when the electrical power generated by the cell stack 11 is output to the outside, and is electrically connected to the end current collection member 17 on a positive electrode side in the cell stack 11A. The negative electrode terminal 19B functions as a negative electrode when the electrical power generated by the cell stack 11 is output to the outside, and is electrically connected to the end current collection member 17 on a negative electrode side in the cell stack 11B.

The connection terminal 19C electrically connects the end current collection member 17 on the negative electrode side in the cell stack 11A and the end current collection member 17 on the positive electrode side in the cell stack 11B.

### Bonding Between Support Member and Cells

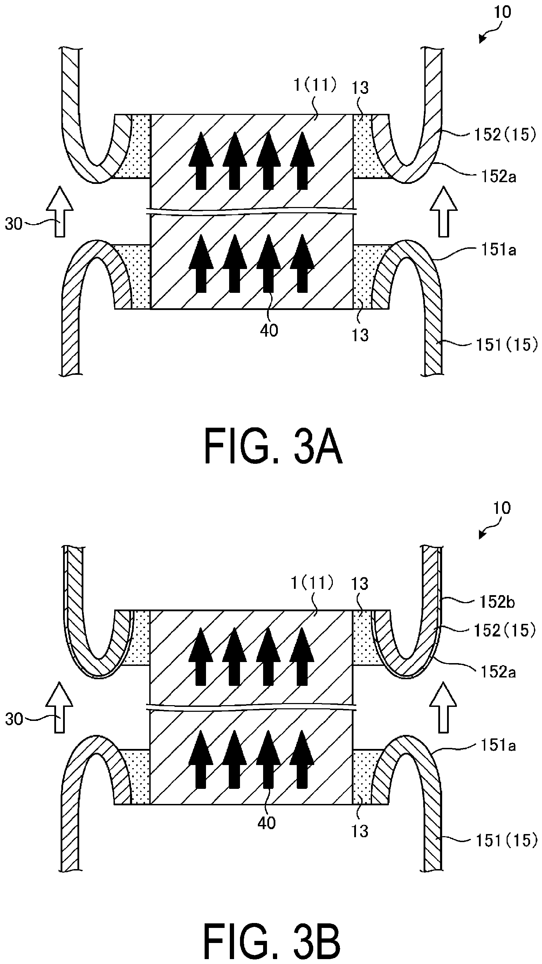

Subsequently, an electrochemical cell device according to a first embodiment will be further described with reference to FIG. 3A. FIG. 3A is a cross-sectional view illustrating an example of an electrochemical cell device according to a first embodiment.

As illustrated in FIG. 3A, both ends of the cell 1 are bonded to the support body 15 with the fixing material 13 interposed therebetween. The support body 15 includes a first member 151 that supports a lower end side that is one end side of the cell 1 and a second member 152 that supports an upper end side that is the other end side of the cell 1.

The cell stack device 10 illustrated in FIG. 3A generates electrical power using an oxygen-containing gas flowing outside the cell 1 in a first direction 30 and a fuel gas flowing inside the cell 1 as indicated by an arrow 40.

A temperature of the cell 1 rises due to Joule heat associated with power generation. At this time, a temperature distribution of the cell 1 is biased due to the influence of the oxygen-containing gas flowing outside the cell 1, or the like. Specifically, the temperature on a downstream side in the first direction 30, that is, an upper end side of the cell 1 supported by the second member 152 becomes higher than the temperature on an upstream side in the first direction 30, that is, a lower end side of the cell 1 supported by the first member 151. For this reason, in a portion of the cell 1 located on the downstream side in the first direction 30, for example, the temperature becomes higher than a temperature suitable for power generation, and the durability is likely to decrease.

Therefore, in the present embodiment, in an exposed portion of the support body 15 supporting the cell 1, which is exposed to an oxidizing atmosphere, the infrared light reflectance is made different between a first portion located on the upstream side in the first direction 30 and a second portion located on the downstream side in the first direction 30 with respect to the first portion. Specifically, an exposed portion 151a of the first member 151 has a lower infrared light reflectance than an exposed portion 152a of the second member 152.

Thus, on the downstream side of the cell 1 in the first direction 30, an increase in the temperature of the cell 1 due to radiant heat from the second member 152 can be reduced. For this reason, it is possible to make it difficult for a decrease in durability due to overheating of the cell 1 to occur. Therefore, the present embodiment can improve battery performance.

On the other hand, the temperature on the upstream side in the first direction 30 tends to be lower than the temperature on the downstream side in the first direction 30. Therefore, in a portion of the cell 1 located on the upstream side in the first direction 30, for example, the temperature does not reach a temperature suitable for power generation, and the power generation performance is likely to decrease.

In the present embodiment, on the upstream side of the cell 1 in the first direction 30, the temperature rise of the cell 1 can be promoted by the radiant heat from the first member 151. For this reason, it is possible to make it difficult for a decrease in power generation performance due to insufficient heating of the cell 1 to occur. Therefore, the present embodiment can improve battery performance.

Here, materials of the first member 151 and the second member 152 are selected from metal materials or ceramics having different infrared light reflectances. The first member 151 and the second member 152 may be made of, for example, metal materials or ceramics having different surface colors.

The second member 152 may be made of, for example, a metal material such as stainless steel containing chromium. The second member 152 may contain, for example, a metal oxide. In addition, the second member 152 may be made of, for example, aluminum oxide (alumina), magnesium oxide (magnesia), silicon oxide (silica), zirconium oxide (zirconia), chromium oxide (chromia), titanium oxide (titania), a composite oxide thereof, or the like. The zirconia may be stabilized zirconia. The composite oxide may be selected from forsterite, cordierite, and the like, for example. The second member 152 may contain, for example, an impurity such as Al₂O₃ or CaO. In addition, the second member 152 may have a surface color of, for example, white, yellow, or the like.

The first member 151 may be made of, for example, a metal material such as stainless steel containing chromium. In addition, the first member 151 may be made of, for example, aluminum oxide (alumina), magnesium oxide (magnesia), silicon oxide (silica), zirconium oxide (zirconia), chromium oxide (chromia), titanium oxide (titania), a composite oxide thereof, or the like. The zirconia may be stabilized zirconia. The composite oxide may be selected from forsterite, cordierite, and the like, for example. The composite oxide may contain, for example, an impurity such as Al₂O₃ or CaO. In addition, the first member 151 may contain, for example, a colored metal oxide containing a transition element such as iron (Fe). The first member 151 may have a surface color of, for example, white, yellow, or black. The first member 151 may be the same type of material or the same type of color as the second member 152 as long as the infrared light reflectance at the exposed portion 151a is lower than that at the exposed portion 152a.

Note that the infrared light reflectance at the exposed portions 151a and 152a can be measured with a near infrared/infrared spectrophotometer or a Fourier transformation infrared spectrometer (FTIR). Infrared light refers to light having a wavelength equal to or longer than 700 nm. When comparing the infrared light reflectance, for example, an average of the reflectances in a range of wavelengths from 1500 nm to 2500 nm may be compared. The infrared light reflectance referred to herein is an average of reflectances in a range of wavelengths from 1500 nm to 2500 nm.

In addition, the first member 151 and/or the second member 152 may be provided with, for example, a coating film having different infrared light reflectances at the exposed portions 151a and 152a. FIGs. 3B to 3D are cross-sectional views illustrating other examples of the electrochemical cell device according to the first embodiment. The cell stack device 10 illustrated in FIG. 3B is different from the cell stack device 10 illustrated in FIG. 3A in that a metal material or the like is used as a support base member and a coating layer 152b is provided that covers a surface of the support base member of the second member 152.

The coating layer 152b is made of a material that causes the infrared light reflectance at the exposed portion 152a to be higher than that at the exposed portion 151a. The coating layer 152b may be made of, for example, aluminum oxide (alumina), magnesium oxide (magnesia), silicon oxide (silica), zirconium oxide (zirconia), chromium oxide (chromia), titanium oxide (titania), a composite oxide thereof, or the like. The zirconia may be stabilized zirconia. The composite oxide may be selected from forsterite, cordierite, and the like, for example. The coating layer 152b may have a surface color of, for example, white, yellow, or the like. The coating layer 152b may contain, for example, a colored metal oxide containing a transition element such as iron (Fe).

In addition, the coating layer 152b may be electrically conductive. The coating layer 152b may contain, for example, an electrically conductive metal material and/or metal oxide. The electrically conductive metal oxide included in the coating layer 152b may be, for example, a composite oxide having a spinel structure, for example, Zn(CoₓMn₁₋ₓ)₂O₄ (0 < x < 1) such as ZnMnCoO₄, Mn_{1.5}Co_{1.5}O₄, MnCo₂O₄, CoMn₂O₄, or the like. The electrically conductive metal oxide may be a so-called ABO₃ perovskite oxide. In addition, the electrically conductive metal oxide may be a zinc oxide, for example.

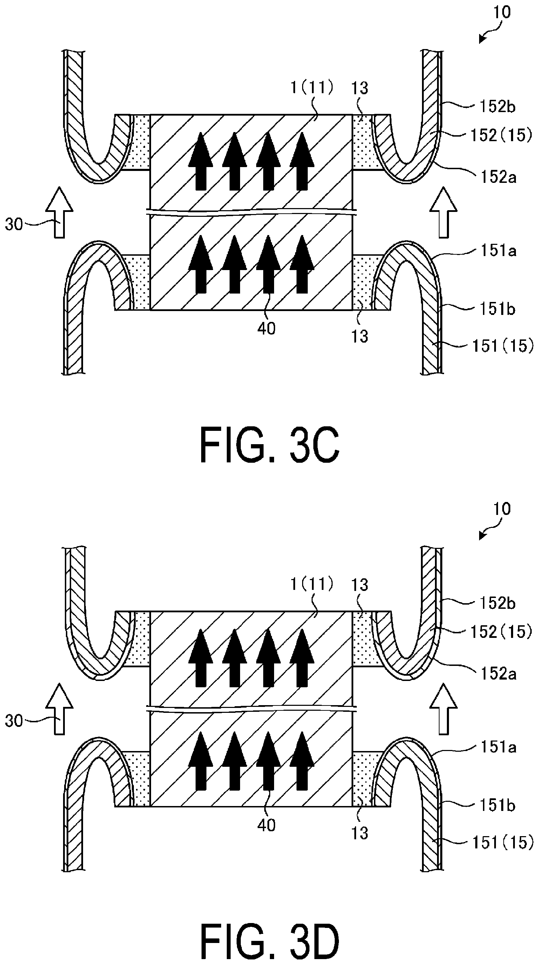

The cell stack device 10 illustrated in FIG. 3C is different from the cell stack device 10 illustrated in FIG. 3B in that a metal material or the like is used as a support base member and a coating layer 151b is provided that covers a surface of the support base member of the first member 151.

The coating layer 151b is made of a material that causes the infrared light reflectance at the exposed portion 151a to be lower than that at the exposed portion 152a. The coating layer 151b may be made of, for example, aluminum oxide (alumina), magnesium oxide (magnesia), silicon oxide (silica), zirconium oxide (zirconia), chromium oxide (chromia), titanium oxide (titania), a composite oxide thereof, or the like. The zirconia may be stabilized zirconia. The composite oxide may be selected from forsterite, cordierite, and the like, for example. The coating layer 151b may have a surface color of, for example, black. The coating layer 151b may contain, for example, a colored metal oxide containing a transition element such as iron (Fe).

In addition, the coating layer 151b may be electrically conductive. The coating layer 151b may contain, for example, an electrically conductive metal material and/or metal oxide. The electrically conductive metal oxide included in the coating layer 151b may be, for example, a composite oxide having a spinel structure, for example, Zn(CoₓMn₁₋ₓ)₂O₄ (0 < x < 1) such as ZnMnCoO₄, Mn_{1.5}Co_{1.5}O₄, MnCo₂O₄, CoMn₂O₄, or the like. The electrically conductive metal oxide may be a so-called ABO₃ perovskite oxide. In addition, the electrically conductive metal oxide may be a zinc oxide, for example.

Note that in the cell stack devices 10 illustrated in FIGs. 3B and 3C, the materials of the first member 151 and the second member 152 may be the same.

The cell stack device 10 illustrated in FIG. 3D is different from the cell stack device 10 illustrated in FIG. 3C in that thicknesses of the coating layers 151b and 152b are different from each other. Specifically, the thickness of the coating layer 151b as a first coating layer is smaller than the thickness of the coating layer 152b as a second coating layer.

When the thickness of the coating layer 151b is smaller than the thickness of the coating layer 152b, the material of the first member 151 may affect the infrared light reflectance at the exposed portion 151a. In this case, for example, even when the materials of the coating layers 151b and 152b are the same, the infrared light reflectance at the exposed portion 151a can be made lower than the infrared light reflectance at the exposed portion 152a.

In the cell stack device 10 illustrated in FIG. 3D, the thickness of the coating layer 151b may be, for example, 70 µm or less, particularly 0.1 µm or greater and 50 µm or less. The thickness of the coating layer 152b may be, for example, 1000 µm or less, particularly 100 µm or greater and 400 µm or less.

### Module

Next, a module 100 according to the present embodiment using the electrochemical cell device described above will be described with reference to FIG. 4. FIG. 4 is an exterior perspective view illustrating a module according to the first embodiment, with a front surface and a rear surface, which are part of a storage container 101, removed and the cell stack device 10 of the fuel cell stored in the storage container taken out rearward.

As illustrated in FIG. 4, the module 100 is constituted by the cell stack device 10 being stored in the storage container 101. Furthermore, the reformer 102 for generating the fuel gas to be supplied to the cells 1 is disposed above the cell stack device 10.

The reformer 102 reforms a raw fuel such as a natural gas or kerosene supplied via a raw fuel supply pipe 103, and produces the fuel gas. Note that the reformer 102 preferably has a structure capable of performing steam reforming, which is an efficient reformation reaction. The reformer 102 can perform the steam reforming by including a vaporizing unit 102a that vaporizes water, and a reforming unit 102b in which a reforming catalyst (not illustrated) is disposed for reforming the raw fuel into the fuel gas.

Then, the fuel gas produced by the reformer 102 is supplied to the fixing member 12 via the gas circulation pipe 20, and the fuel gas is supplied via the fixing member 12 to the gas-flow passages 2a (see FIG. 1A) formed inside the cells 1.

Furthermore, in the module 100 having the configuration described above, during normal power generation, a temperature in the module 100 rises to approximately 500°C to 1000°C due to the aforementioned combustion and power generation in the cells 1.

The above-described module 100 is configured such that the cell stack device 10 with improved battery performance is stored therein as described above, whereby the module 100 with improved battery performance can be obtained.

### Module Housing Device

FIG. 5 is an exploded perspective view illustrating an example of a module housing device according to the first embodiment. A module housing device 110 according to the embodiment includes an external case, the module 100 illustrated in FIG. 4, and an auxiliary device (not illustrated). The auxiliary device operates the module 100. The module 100 and the auxiliary device are housed inside the external case. Note that in FIG. 5, the configuration is partially omitted.

The external case of the module housing device 110 illustrated in FIG. 5 includes a column 111 and an external plate 112. A dividing plate 113 vertically divides the interior of the external case. A space above the dividing plate 113 inside the external case is a module housing chamber 114 that houses the module 100, and a space below the dividing plate 113 inside the external case is an auxiliary device housing chamber 115 that houses the auxiliary device that operates the module 100. Note that in FIG. 5, the auxiliary device housed in the auxiliary device housing chamber 115 is omitted.

In addition, the dividing plate 113 includes an air circulation hole 116 for causing air in the auxiliary device housing chamber 115 to flow into the module housing chamber 114 side. The external plate 112 constituting the module housing chamber 114 includes an exhaust hole 117 for discharging air inside the module housing chamber 114.

In the module housing device 110 described above, the module 100 with improved battery performance is provided in the module housing chamber 114 as described above, whereby the module housing device 110 with improved battery performance can be obtained.

### Second Embodiment

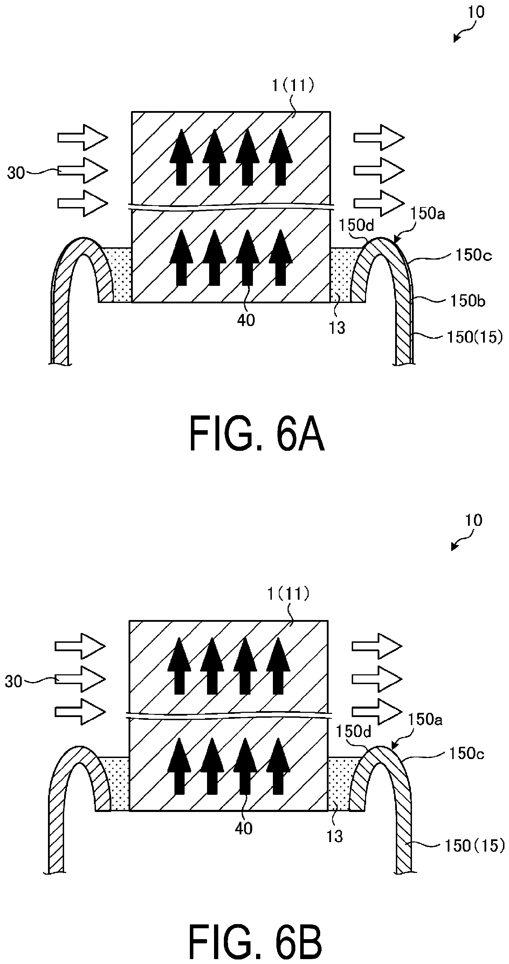

FIG. 6A is a cross-sectional view of a cell stack device according to a second embodiment. As illustrated in FIG. 6A, one end of the cell 1 is fixed to the support body 15 with the fixing material 13 interposed therebetween. The support body 15 supports a lower end side that is one end side of the cell 1.

The cell stack device 10 illustrated in FIG. 6A generates electrical power using an oxygen-containing gas flowing outside the cells 1 in the first direction 30 and a fuel gas flowing inside the cell 1 as indicated by the arrow 40.

A temperature of the cell 1 rises due to Joule heat associated with power generation. At this time, a temperature distribution of the cell 1 is biased due to the influence of the oxygen-containing gas flowing outside the cell 1, or the like. Specifically, a temperature of a portion of the cell 1 located on the downstream side in the first direction 30 is more likely to increase than a temperature of a portion located on the upstream side in the first direction 30. For this reason, in the portion of the cell 1 located on the downstream side in the first direction 30, for example, the temperature becomes higher than a temperature suitable for power generation, and the durability is likely to decrease.

In the present embodiment, a coating layer 150b is located on a portion 150 of the support body 15 supporting the cell 1, which is located on the downstream side in the first direction 30 and is located away from the cell 1. Thus, in an exposed portion 150a exposed to an oxidizing atmosphere, the infrared light reflectance is made different between a portion 150d close to the cell 1 and a portion 150c more distant from the cell 1 than the portion 150d is. Specifically, the portion 150c has a lower infrared light reflectance than the portion 150d.

On the downstream side in the first direction 30 of the cell 1 close to the portion 150d, an increase in the temperature of the cell 1 due to radiant heat from the portion 150 of the support body 15 can be reduced. For this reason, it is possible to make it difficult for a decrease in durability due to overheating of the cell 1 to occur. Therefore, the present embodiment can improve battery performance.

In the cell stack device 10 illustrated in FIG. 6A, the infrared light reflectance is made different by locating the coating layer 150b at a portion, which is away from the cell 1, of the portion 150 of the support body 15, but no such limitation is intended. For example, the coating layer may be located at a portion close to the cell 1, or the coating layer in which the infrared light reflectance is different between a portion close to the cell 1 and a portion away from the cell 1 may be located.

FIG. 6B is a cross-sectional view illustrating another example of the cell stack device according to the second embodiment. In the cell stack device 10 illustrated in FIG. 6B, a surface roughness is different between a portion 150c and a portion 150d. Specifically, the portion 150c has a surface roughness Ra smaller than that of the portion 150d. Thus, even when the portion 150 of the support body 15 is made of a single material, the infrared light reflectance can be made different. For this reason, in the cell stack device 10 illustrated in FIG 6B, it is possible to make it difficult for a decrease in durability due to overheating of the cell 1 to occur, so that it is possible to improve battery performance.

### Variations of Second Embodiment

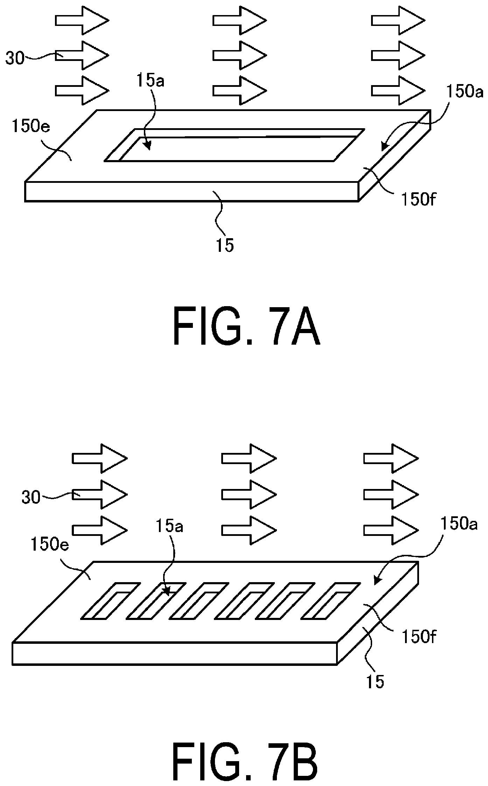

Next, the support body 15 according to variations of the present embodiment will be described with reference to FIGs. 7A and 7B. FIGs. 7A and 7B are perspective views illustrating other examples of the support body.

When the support body 15 having a flat plate shape as illustrated in FIG. 7A is used, an internal space 22 (see FIG. 2B) is formed as a result of the gas tank 16 (see FIG. 2B) being bonded to the lower surface of the support body 15 having the flat plate shape.

In addition, the support body 15 illustrated in FIG. 7B has a plurality of insertion holes 15a. In this case, the cells 1 may be inserted into the plurality of insertion holes 15a of the support body 15 in a one-to-one manner, or a plurality of the cells 1 may be inserted into each of the plurality of insertion holes 15a of the support body 15.

As illustrated in FIGs. 7A and 7B, when the oxygen-containing gas flows outside the support body 15 in the first direction 30, the infrared light reflectance at the exposed portion 150a exposed to the oxygen-containing gas is different between the upstream side and the downstream side in the first direction 30. That is, a first portion 150e, which is located on the upstream side in the first direction 30, of the exposed portion 150a has a lower infrared light reflectance than a second portion 150f located on the downstream side in the first direction 30. Thus, on the downstream side in the first direction 30, an increase in the temperature of the cell 1 inserted in the insertion hole 15a due to the radiant heat from the second portion 150f can be reduced. For this reason, it is possible to make it difficult for a decrease in durability due to overheating of the cell 1 to occur. In addition, on the upstream side in the first direction 30, the temperature rise of the cell 1 can be promoted by radiant heat from the first portion 151e. For this reason, it is possible to make it difficult for a decrease in power generation performance due to insufficient heating of the cell 1 to occur. This can improve battery performance.

### Third Embodiment

In each of the embodiments described above, a so-called "vertically striped type" cell stack device, in which only one element portion including a fuel electrode, a solid electrolyte layer, and an air electrode is provided on the surface of the support substrate, has been exemplified. However, the embodiments can be applied to a horizontally striped type cell stack device with a stack of so-called "horizontally striped type" cells, in which a plurality of element portions are provided on the surface of a support substrate at mutually separated locations and adjacent element portions are electrically connected to each other.

In addition, in the embodiments described above, the case where the hollow flat plate-type support substrate is used has been exemplified; however, the embodiments can also be applied to a cell stack device using a cylindrical support substrate. As will be described later, the embodiments can also be applied to a flat plate cell stack device in which so-called "flat plate" cells are stacked in the thickness direction.

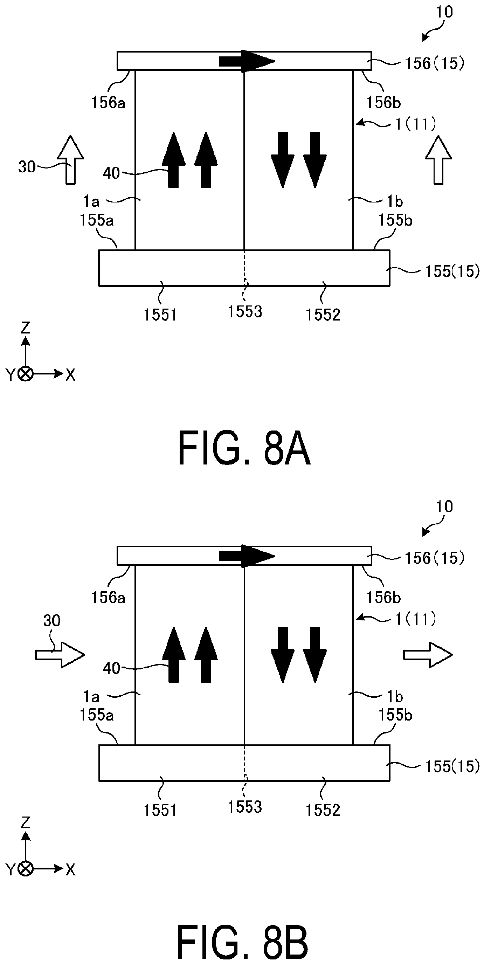

FIG. 8A is a cross-sectional view of a cell stack device according to a third embodiment. The cell stack device 10 illustrated in FIG. 8A includes a manifold 155, a communicating member 156, and a cell stack 11. The manifold 155 and the communicating member 156 support both ends of the plurality of cells 1 included in the cell stack 11. The manifold 155 and the communicating member 156 internally have a space communicating with the gas-flow passages 2a of the cell 1.

The cell 1 is of a flat plate type and includes a first portion 1a and a second portion 1b. In the first portion 1a, the fuel gas flows from the manifold 155 toward the communicating member 156. In the second portion 1b, the fuel gas flows from the communicating member 156 toward the manifold 155. The manifold 155 may include a supply portion 1551 that supplies the fuel gas to the first portion 1a and a collection portion 1552 that collects the gas flowing from the second portion 1b. The manifold 155 may include a partition wall 1553 that separates the supply portion 1551 and the collection portion 1552 so that the fuel gas in the supply portion 1551 supplied to the first portion 1a and the fuel gas in the collection portion 1552 collected from the second portion 1b are not mixed with each other.

As illustrated in FIG. 8A, when the oxygen-containing gas flows outside the cell 1 from the manifold 155 side toward the communicating member 156 side, the temperature of the first portion 1a and the second portion 1b close to the communicating member 156 behaves to be higher than the temperature of the first portion 1a and the second portion 1b close to the manifold 155. At this time, the infrared light reflectance at exposed portions 156a and 156b of the communicating member 156 respectively facing the first portion 1a and the second portion 1b located on the downstream side in the first direction 30 is lower than the infrared light reflectance at exposed portions 155a and 155b of the manifold 155 respectively facing the first portion 1a and the second portion 1b located on the upstream side in the first direction 30. In addition, the infrared light reflectance at the exposed portion 155a may be higher than the infrared light reflectance at the exposed portion 155b. This reduces variation in the temperature in the cell 1 and can improve battery performance.

FIG. 8B is a cross-sectional view illustrating another example of the cell stack device according to the third embodiment. The cell stack device 10 illustrated in FIG. 8 is different from the cell stack device 10 illustrated in FIG. 8A in that the oxygen-containing gas flows outside the cell 1 from the first portion 1a side toward the second portion 1b side of the cell 1. In this case, the temperature behaves to be higher in the order of the second portion 1b close to the communicating member 156, the first portion 1a close to the communicating member 156, the second portion 1b close to the manifold 155, and the first portion 1a close to the manifold 155.

In this case, the infrared light reflectance at the exposed portion 155a may be lower than the infrared light reflectance at the exposed portion 155b, and the infrared light reflectance at the exposed portion 156a may be lower than the infrared light reflectance at the exposed portion 156b. This reduces variation in the temperature in the cell 1 and can improve battery performance. In the third embodiment, a hollow flat plate-type cell 1 may be used instead of the flat plate-type cell 1. The communicating member 156 may support one end of the plurality of cells 1, but each cell 1 may individually have the communicating member 156, and the communicating members may be separated from each other.

### Other Variations

In each of the embodiments described above, a fuel cell, a fuel cell stack device, a fuel cell module, and a fuel cell device have been illustrated as examples of the "electrochemical cell", the "electrochemical cell device", the "module", and the "module housing device"; however, they may be an electrolytic cell, an electrolytic cell stack device, an electrolytic module, and an electrolytic device, respectively, as other examples. The electrolytic cell includes a hydrogen electrode and an oxygen electrode, and decomposes water vapor into hydrogen and oxygen by supplying electrical power. In addition, although the oxide ion conductor or the hydrogen ion conductor has been described as an example of the electrolyte material of the electrochemical cell in the above embodiments, the electrolyte material may be a hydroxide ion conductor.

In addition, in the first and second embodiments, the first portion and the second portion with different infrared light reflectances are located on the surface of the support body 15. However, no such limitation is intended, and the first portion and the second portion may be located on the surface of the gas tank 16, for example. Additionally, the first portion and the second portion may be parts of the exposed portion exposed to the oxygen-containing gas. Furthermore, the first portion and the second portion may be located on a surface of a current collector, an interconnector, an end plate, or the like of a so-called flat plate cell. The first portion and the second portion may be located on surfaces of the support substrate 2, the member 120, and the like of the cell 1 illustrated in FIGs. 1D to 1F.

Additionally, in each of the embodiments described above, the downstream side of the cell 1 in the first direction 30 is likely to be higher in temperature than the upstream side thereof and the upstream side of the cell 1 in the first direction 30 is likely to be lower in temperature than the downstream side thereof. In other words, the high-temperature portion is located on the downstream side of the cell 1 in the first direction 30 and the low-temperature portion is located on the upstream side thereof in the first direction 30. However, since the temperature distribution in the cell stack device 10 may vary depending on, for example, the structures of the cell stack 11 and the gas-flow passage, and the like, the arrangement of the high-temperature portion and the low-temperature portion is not limited to one described above. For example, the high-temperature portion may be located at a center of the cell stack 11, and the low-temperature portion may be located at an end portion of the cell stack 11. In addition, in the electrochemical cell device according to the second embodiment, for example, the high-temperature portion may be located at a central portion of the element portion included in the flat plate-type cell or the cell 1 illustrated in FIGs. 1D to 1F, and the low-temperature portion may be located at a peripheral edge portion of the cell 1 away from the element portion. Even in such a case, the battery performance of the cell stack device 10 can be improved by making the infrared light reflectance different between the first portion located at the low-temperature portion and the second portion located at the high-temperature portion.

While the present disclosure has been described in detail, the present disclosure is not limited to the aforementioned embodiment, and various changes, improvements, and the like can be made without departing from the gist of the present disclosure.

As described above, an electrochemical cell device (for example, the cell stack device 10) according to the embodiment includes an electrochemical cell (for example, the cell 1) and the support member 14 (support body 15). The support member 14 supports the electrochemical cell. The support member 14 includes a first portion located on an upstream side in the first direction 30 in which a reactive gas flows and a second portion located on a downstream side in the first direction 30 with respect to the first portion. The first portion and the second portion have different infrared light reflectances. This can improve battery performance of the electrochemical cell device.

The module 100 according to the embodiment includes the electrochemical cell device (for example, the cell stack device 10) described above, and the storage container 101 housing the electrochemical cell device. As a result, the module 100 with improved battery performance may be obtained.

The module housing device 110 according to the embodiment includes the module 100 described above, the auxiliary device configured to operate the module 100, and the external case housing the module 100 and the auxiliary device. Thus, the module housing device 110 with improved battery performance can be obtained.

Note that the embodiments disclosed herein are exemplary in all respects and not restrictive. The aforementioned embodiments can be embodied in a variety of forms. The aforementioned embodiments may be omitted, replaced, or changed in various forms without departing from the scope of the appended claims and the purpose thereof.

### REFERENCE SIGNS

1 Cell
10 Cell stack device
11 Cell stack
12 Fixing member
13 Fixing material
14 Support member
15 Support body
16 Gas tank
17 End current collection member
18 Electrically conductive member
100 Module
110 Module housing device

## Claims

1. An electrochemical cell device comprising:
an electrochemical cell; and
a support member supporting the electrochemical cell,
wherein the support member comprises a first portion located on an upstream side in a first direction in which a reactive gas flows and a second portion located on a downstream side in the first direction with respect to the first portion, and
the first portion and the second portion have different reflectances to infrared light.

2. An electrochemical cell device comprising:
an electrochemical cell; and
a support member supporting the electrochemical cell,
wherein the support member comprises a first portion located at a low-temperature portion of the electrochemical cell and a second portion located at a high-temperature portion of the electrochemical cell higher in temperature than the low-temperature portion, and
the first portion and the second portion have different reflectances to infrared light.

3. The electrochemical cell device according to claim 1 or 2, wherein the reflectance of the first portion is lower than the reflectance of the second portion.

4. The electrochemical cell device according to any one of claims 1 to 3, wherein the support member comprises a first member supporting a first end portion of the electrochemical cell and a second member supporting a second end portion of the electrochemical cell.

5. The electrochemical cell device according to any one of claims 1 to 4, wherein the support member comprises a support base member and a coating layer covering the support base member at the second portion.

6. The electrochemical cell device according to any one of claims 1 to 5, wherein the support member comprises a support base member, a first coating layer covering the support base member at the first portion, and a second coating layer covering the support base member at the second portion.

7. The electrochemical cell device according to claim 6, wherein a thickness of the first coating layer is smaller than a thickness of the second coating layer.

8. A module comprising:
the electrochemical cell device according to any one of claims 1 to 7; and
a storage container storing the electrochemical cell device.

9. A module housing device comprising:
the module according to claim 8;
an auxiliary device configured to operate the module; and
an external case housing the module and the auxiliary device.
